# EUROPEAN PATENT SPECIFICATION

(11) **EP 1 303 153 B1**
(45) Date of publication and mention of the grant of the patent: **12.04.2006**
(21) Application number: 02256948.7
(22) Date of filing: 08.10.2002
(51) Int. Cl.: H04Q 7/32

(54) **Apparatus and method for selecting software modules in a mobile terminal**
Vorrichtung und Verfahren zur Auswahl von Programm-Bausteinen in einem mobilen Endgerät
Appareil et procédé pour la sélection de modules logiciels dans une station mobile

(30) Priority: 10.10.2001 GB 0124304
(43) Date of publication of application: 16.04.2003
(73) Proprietor: Vodafone Group PLC, Newbury Berkshire RG14 2FN (GB)
(72) Inventor: Chanrasiri, Pubudu Priyanjaya, Elstree, Hertfordshire, WD6 3NJ (GB); Lincoln, Adrian David, Hurstpierpoint, West Sussex, BN6 9RR (GB); Bennet, James M., Thatcham, Berkshire RG18 9JN (GB)
(74) Representative: Foster, Mark Charles

(56) References cited:
- WO-A-00/59225
- WO-A-00/72149
- WO-A-01/17309
- "ETSI TS 123 057 V4.2.0 (2001-06) Digital cellular telecommunication system (phase 2+)(GSM); Universal Mobile Telecommunication System (UMTS); Mobile Execution Environment (MExE); Functional description; Stage 2 (3GPP TS 23.057 version 4.2.0 Release 4))" [Online] 30 June 2001 (2001-06-30) , ETSI , SOPHIA ANTIPOLIS - FRANCE XP002223101 Retrieved from the Internet: <URL: http://www.etsi.org> [retrieved on 2002-11-27] chapter 4.7, 6, 8.2-8.7
- SCHLÄPFER, KUBIK, ZAVAGLI: "Mobile Applications with J2ME A White Paper" [Online] 7 July 2001 (2001-07-07) , ERICSSON RADIO SYSTEMS XP002223102 Retrieved from the Internet: <URL: http://www.ericsson.co.th/mobilityworld/Ja va/White_Paper.pdf> [retrieved on 2002-11-29] chapters 1,2,3,4.1-4.5,5.4

## Description

The invention relates to mobile telecommunications apparatus and methods. Telecommunications apparatus embodying the invention, and to be described in more detail below by way of example only, comprise terminals (such as mobile telephone handsets) for use in public land mobile networks such as cellular networks operating according to the GSM protocols.

Known telecommunications apparatus provides a device having a smart card or SIM associated therewith, the device having a plurality of applications stored in the program memory. Such apparatus is disclosed in WO00/72149.

According to the invention there is provided a terminal for a mobile telecommunications network having a plurality of software capabilities; and selecting means for selecting particular ones of the software capabilities to be accessible as a set of software capabilities in respective logical domains such that respective logical domains each comprise a different set of software capabilities, the selecting means comprising data storage means for storing information relating to the domains and selecting the software capabilities which are to be accessible therethrough, characterised in that the terminal has a plurality of smart card means or SIM means associable therewith, in that a respective storage means is associated with each smart card means or SIM means, in that that the storage means are located separately from each smart card means or SIM means, in that each smart card means or SIM means stores the address of its associated storage means, and in that the respective storage means associated with each smart card means or SIM means contains different information so that the software capabilities which are available to the user of the terminal at a particular time is dependent on which of the smart card means or SIM means is associated with the terminal at that time.

According to the invention, there is also provided a method of operating a terminal for use in a mobile telecommunications network, comprising the steps of defining a plurality of software capabilities therein; and selecting particular ones of the software capabilities to be accessible as a set of software capabilities in respective logical domains such that respective logical domains each comprise a different set of software capabilities, the selecting step comprising the step of storing domain information relating to the domains and which selects the applications which are to be accessible therethrough, characterised in that the terminal has a plurality of smart card means or SIM means associable therewith, in that in respective domain information is stored in association with each smart card means or SIM means, in that the domain information is stored at a location separate from each SIM means or smart card means, in that each SIM means or smart card means stores the address of its associated domain information, and in that the respective domain information associated with each SIM means or smart card means comprises different information so that the software capabilities which are available to the user of the terminal at a particular time is dependent on which of the SIM means or smart card means is associated with the terminal at that time.

Mobile telecommunications apparatus embodying the invention, in the form of a mobile telephone handset, and mobile telecommunications methods according to the invention, will now be described, by way of example only, with reference to the accompanying diagrammatic drawings in which:
Figure 1 represents "domains" defining software capabilities or application programming interfaces (APIs) held within a known mobile telephone handset; and
Figure 2 corresponds to Figure 1 but shows how the domains in one of the mobile telephone handsets embodying the invention can be controlled by enabling or disabling different ones of the APIs.

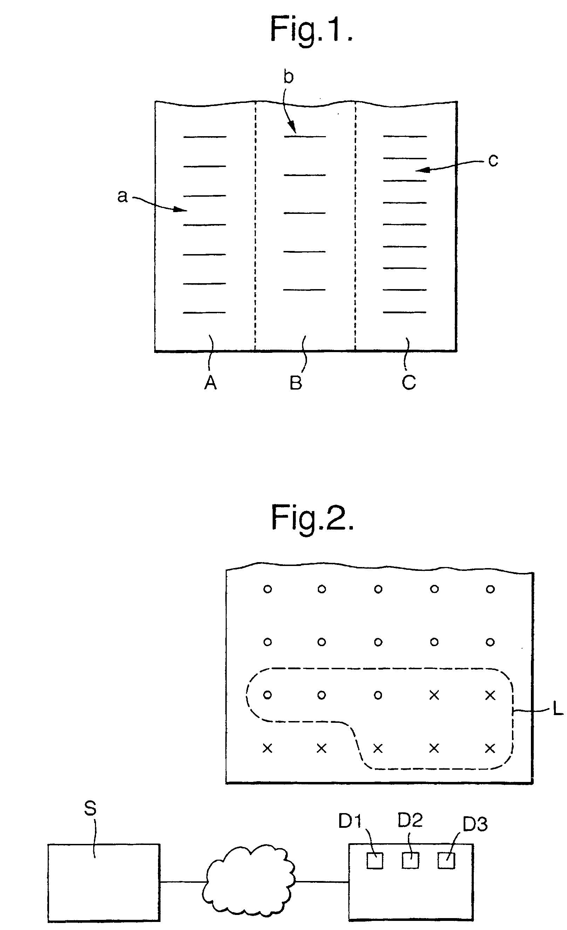

Figure 1 shows how a mobile telephone terminal or handset holds software capabilities arranged within different security "domains" A, B, C. The software capabilities are implemented as application programming interfaces or APIs. A security domain comprises a set of APIs accessible by means of a Root Public Key. The APIs *a* established in domain A can, for example, be APIs set up therein by the operator of the network, such as APIs concerned with the operation of the handset within the network.

The APIs *b* established in domain B can be APIs set up therein by the manufacturer of the handset - for example, APIs for use in games applications, APIs for carrying out calculations and information storage and manipulation.

The APIs *c* established in domain C can be APIs set up therein by a third party, for example, APIs for use in providing road traffic information.

The APIs *a, b,* and *c* within the domains A,B,C are fixed within the terminal at the time of its manufacture or sale. The number of domains is fixed and the capabilities or APIs associated with each domain are fixed. The domains and all their capabilities are thus available when the terminal is powered on. Therefore, there is no external means available of changing the domains or controlling their availability.

In accordance with a feature of the invention, means are provided for externally enabling different ones of a number of APIs in a terminal and thus configuring them into different domains. Figure 2 shows a number of "standard" APIs (each shown as a •). These are APIs for carrying out basic functions and are in general always available when the terminal is powered up. Also shown are further APIs (each shown as an x) which can be controlled (in a manner to be explained) so as to be enabled or disabled thus configuring them into different domains.

One way in which the APIs x can be enabled/disabled is by means of a user's SIM shown at S in Figure 2. In accordance with a feature of the invention, the SIM S is provided with means for accessing "domain definition files" such as shown at D1, D2, D3. In particular, each such tile D1, D2, D3 will identify the APIs to be associated with a particular domain and security information associated with the domain. Some of the APIs can be some of the standard APIs •, and others can be particular ones of the APIs x. When the SIM is inserted in the terminal, and when the terminal is powered up, the terminal will read the information in the domain definition files D1, D2, D3 and will configure the APIs in each domain in accordance with the information in the files. Thus, the information in each domain definition file D1, D2, D3 will allow only particular ones of the APIs x to be enabled. Thus, for example, the domain definition file D1 could enable the APIs shown within the dotted line L in Figure 2 to form a particular domain. The other domain definition files D2 and D3 could select different ones of the APIs to define different domains.

In this way, different SIMs would define different domains - that is, domains having different combinations of the APIs enabled. For example, a user could have two SIMs, one for personal use of a mobile terminal and the other for business use of such a terminal. The domain definition files associated with each of the SIMs would contain different information so that the APIs available for carrying out different applications would depend on which SIM is currently used.

In addition, it becomes possible to update or re-configure the capabilities of the domains by changing the information in the relevant domain definition file using, for example, OTA (over-the -air) methods. For example, a user may have paid a subscription which allows use of particular applications corresponding to particular domains, all as defined by the domain definition files associated with the user's SIM. If the user wants to have use of further applications, the user can request this by a communication (eg a telephone call) to the operator or service provider. By means, for example, of an OTA transmission, the operator or service provider can change the information in one or more of the domain definition files associated with the user's SIM, thus enabling further domains and applications available.

As a domain definition file may be too large to be stored on the SIM, the SIM stores the address of a storage location from which the file can be accessed. For example, the file could be fetched from a secure server over an internet link, the SIM holding the URL of the location from which the file is to be fetched.

Although configuring, re-configuring and up-dating of the capabilities of the domains is advantageously carried out by means of domain definition files associated with the SIM, the invention can also be applied to terminals not using SIMs. In such a case, the domain definition files will be held in a secure area in the terminal itself, preferably also with the capability of up-dating by OTA methods.

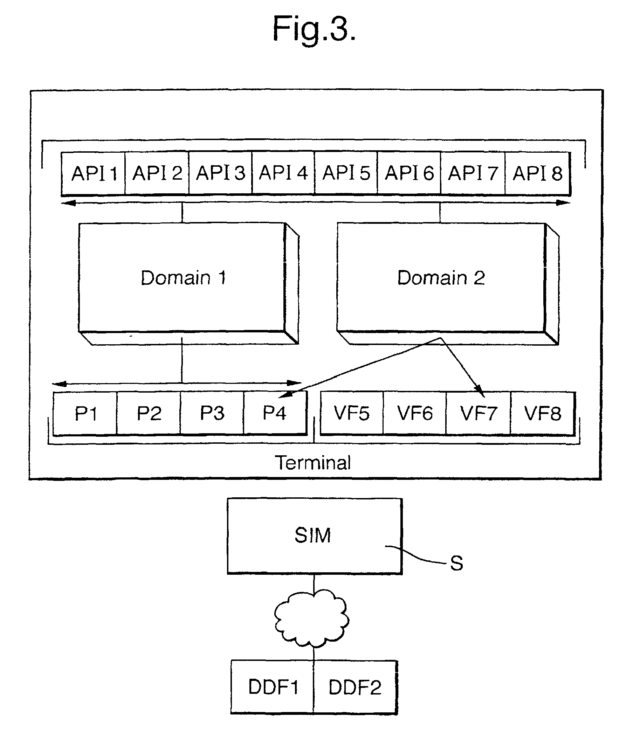

Figure 3 shows a more detailed example. Here, a terminal has 'standard' APIs, API1 to AP18, which are always enabled. Also provided are APls P1 to P4 and VF5 to VF8 which can be enabled/disabled in the manner described. The SIM S shown in Figure 3 has (in this example) two domain definition files DDF1 and DDF2 associated with it. DDF1 defines Domain 1. As shown, this domain uses the standard APIs API1 to API8 plus the APIs P1 to P4. DDF2 defines Domain 2 which uses the standard APIs API1 to API8 plus API VF7 and API4.

## Claims

1. A terminal for a mobile telecommunications network having a plurality of software capabilities (a,b,c; API1..API8,P1..P4,VF5..VF8); and selecting means for selecting particular ones of the software capabilities (a,b,c; API1..API8,P1..P4,VF5..VF8) to be accessible as a set of software capabilities in respective logical domains (A,B,C; Domain 1, Domain 2) such that respective logical domains (A, B, C; Domain 1, Domain 2) each comprise a different set of software capabilities, the selecting means comprising data storage means for storing information (D1,D2,D3; DDF1, DDF2) relating to the domains (A,B,C; Domain 1, Domain 2) and selecting the software capabilities (a,b,c; API1..API8,P1..P4,VF5..VF8) which are to be accessible therethrough, **characterised in that** the terminal has a plurality of smart card means or SIM means (S) associable therewith, **in that** a respective storage means is associated with each smart card means or SIM means (S), **in that** that the storage means are located separately from each smart card means or SIM means (S), **in that** each smart card means or SIM means (S) stores the address of its associated storage means, and **in that** the respective storage means associated with each smart card means or SIM means (S) contains different information (D1, D2, D3; DDF1, DDF2) so that the software capabilities (a,b,c; API1 ...APIB, P1...P4, VF5..VF8) which are available to the user of the terminal at a particular time is dependent on which of the smart card means or SIM means (S) is associated with the terminal at that time.

2. A terminal according to claim 1, in which the storage means are accessed from the terminal via the address on the SIM means (S) by means of an external communications link.

3. A terminal according to claim 2, in which the external communications link is an Internet link.

4. A terminal according to any one of the preceding claims, in which the domains (A,B,C; Domain 1, Domain 2) are accessible by means of a root public key.

5. A terminal according to any one of the preceding claims, in which the software capabilities (a,b,c; API1..API8., P1..P4, VF5..VF8) are application programming interfaces.

6. A terminal according to any one of the preceding claims, including means for up-dating the information (D1,D2,D3; DDF1, DDF2) stored in the storage means such that the ones of the software capabilities (a,b,c; API1..APIB,P1..P4,VF5..VF8) accessible trough the domains (A,B,C; Domain 1, Domain 2) can be varied.

7. A method of operating a terminal for use in a mobile telecommunications network, comprising the steps of defining a plurality of software capabilities (a,b,c; API1..API8,P1..P4,VF5..VF8) therein; and selecting particular ones of the software capabilities (a,b,c; API1..API8,P1..P4,VF5..VF8) to be accessible as a set of software capabilities in respective logical domains (A,B,C; Domain 1, Domain 2) such that respective logical domains (A, B, C; Domain 1, Domain 2) each comprise a different set of software capabilities, the selecting step comprising the step of storing domain information (D1,D2,D3; DDF1, DDF2) relating to the domains (A,B,C; Domain 1, Domain 2) and which selects the applications which are to be accessible therethrough, **characterised in that** the terminal has a plurality of smart card means or SIM means associable therewith, **in that** in respective domain information is stored in association with each smart card means or SIM means (S), **in that** the domain information is stored at a location separate from each SIM means (S) or smart card means, **in that** each SIM means (S) or smart card means stores the address of its associated domain information, and **in that** the respective domain information associated with each SIM means (S) or smart card means comprises different information (D1, D2, D3; DDF1, DDF2) so that the software capabilities (a,b,c; API1... API8, P1...P4, VF5...VF8) which are available to the user of the terminal at a particular time is dependent on which of the SIM means (S) or smart card means is associated with the terminal at that time.

8. A method according to claim 7, including the step of accessing the location from the terminal via the address on the SIM means (S) by means of an external communications link.

9. A method according to claim 8, in which the external communications link is an Internet link.

10. A method according to any one of claims 7 to 9, in which the domains (A,B,C; Domain 1, Domain 2) are accessible by means of a root public key.

11. A method according to any one of claims 7 to 10, in which the software capabilities (a,b,c; API1..API8,P1..P4,VF5..VF8) are application programming interfaces.

12. A method according to any one of claims 7 to 11, including the step of up-dating the domain information (D1,D2,D3; DDF1, DDF2) such that the ones of the software capabilities (a,b,c; API1..API8,P1..P4,VF5..VF8) accessible trough the domains (A,B,C; Domain 1, Domain 2) can be varied.

## Revendications

1. Terminal destiné à un réseau de télécommunications pour mobiles comportant une pluralité de capacités logicielles (a, b, c ; API1...API8, P1...P4, VF5...VF8) et un moyen de sélection destiné à sélectionner des capacités particulières parmi les capacités logicielles (a, b, c ; API1...API8, P1...P4, VF5...VF8) devant être accessibles en tant qu'ensembles de capacités logicielles dans des domaines logiques respectifs (A, B, C ; Domaine 1, Domaine 2) de sorte que des domaines logiques respectifs (A, B, C ; Domaine 1, Domaine 2) comprennent chacun un ensemble différent de capacités logicielles, le moyen de sélection comprenant des moyens de mémorisation de données destinés à mémoriser des informations (D1, D2, D3 ; DDF1, DDF2) se rapportant aux domaines (A, B, C ; Domaine 1, Domaine 2) et sélectionnant les capacités logicielles (a, b, c ; API1...API8, P1...P4, VF5...VF8) qui doivent être accessibles par son intermédiaire, **caractérisé en ce que** le terminal comporte une pluralité de moyens de cartes intelligentes ou de moyens de modules SIM (S) pouvant lui être associés, **en ce qu'**un moyen de mémorisation respectif est associé à chaque moyen de carte intelligente ou moyen de module SIM (S), dans ce que les moyens de mémorisation sont localisés séparément de chaque moyen de carte intelligente ou moyen de module SIM (S), **en ce que** chaque moyen de carte intelligente ou moyen de module SIM (S) mémorise l'adresse de son moyen de mémorisation associé, et **en ce que** le moyen de mémorisation respectif associé à chaque moyen de carte intelligente ou chaque moyen de module SIM (S) contient des informations différentes (D1, D2, D3 ; DDF1, DDF2) de sorte que les capacités logicielles (a, b, c ; API1...API8, P1...P4, VF5...VF8) qui sont disponibles pour l'utilisateur du terminal à un moment particulier dépendent du moyen de carte intelligente ou du moyen de module SIM (S) qui est associé au terminal à ce moment.

2. Terminal selon la revendication 1, dans lequel on accède aux moyens de mémorisation par l'intermédiaire de l'adresse sur le moyen de module SIM (S) au moyen d'une liaison de communication externe.

3. Terminal selon la revendication 2, dans lequel la liaison de communication externe est une liaison Internet.

4. Terminal selon l'une quelconque des revendications précédentes, dans lequel on peut accéder aux domaines (A, B, C ; domaine 1, domaine 2) au moyen d'une clé publique racine.

5. Terminal selon l'une quelconque des revendications précédentes, dans lequel les capacités logicielles (a, b, c ; API1...API8, P1...P4, VF5...VF8) sont des interfaces de programmation d'application.

6. Terminal selon l'une quelconque des revendications précédentes, comprenant des moyens de mise à jour des informations (D1, D2, D3 ; DDF1, DDF2) mémorisés dans les moyens de mémorisation de sorte que l'on peut faire varier celles des capacités logicielles (a, b, c ; API1...API8, P1...P4, VF5...VF8) auxquelles on peut accéder par l'intermédiaire des domaines (A, B, C ; Domaine 1, Domaine 2).

7. Procédé de mise en oeuvre d'un terminal à utiliser dans un réseau de télécommunications pour mobiles comprenant les étapes consistant à définir une pluralité de capacités logicielles (a, b, c ; API1...API8, P1...P4, VF5...VF8) dans celui-ci, et à sélectionner les capacités particulières parmi les capacités logicielles (a, b, c ; API1...API8, P1...P4, VF5...VF8) devant être accessibles sous forme d'un ensemble de capacités logicielles dans les domaines logiques respectifs (A, B, C ; Domaine 1, Domaine 2) de sorte que des domaines logiques respectifs (A, B, C ; Domaine 1, Domaine 2) comprennent chacun un ensemble différent de capacités logicielles, l'étape de sélection comprenant l'étape consistant à mémoriser des informations de domaine (D1, D2, D3 ; DDF1, DDF2) se rapportant aux domaines (A, B, C ; Domaine 1, Domaine 2) et qui sélectionne les applications qui doivent être accessibles par son intermédiaire, **caractérisé en ce que** le terminal comporte une pluralité de moyens de cartes intelligentes ou de moyens de modules SIM pouvant être associés à celui-ci, **en ce que**, dans un domaine respectif, des informations sont mémorisées en association avec chaque moyen de carte intelligente ou moyen de module SIM (S), **en ce que** les informations de domaine sont mémorisées à un emplacement séparé de chaque moyen de module SIM (S) ou de chaque moyen de module, **en ce que** chaque moyen de module SIM (S) ou carte intelligente mémorise l'adresse de ses informations de domaine associé, et **en ce que** les informations de domaines respectives associées à chaque moyen de module SIM (S) ou moyen de carte intelligente comprennent des informations différentes (D1, D2, D3 ; DDF1, DDF2) de sorte que les capacités logicielles (a, b, c ; API1...API8, P1...P4, VF5 ... VF8) qui sont disponibles pour l'utilisateur du terminal à un moment particulier, dépende du moyen de module SIM (S) ou du moyen de carte intelligente qui est associé au terminal à ce moment.

8. Procédé selon la revendication 7, comprenant l'étape consistant à accéder à l'emplacement depuis le terminal par l'intermédiaire de l'adresse sur le moyen de module SIM (S) au moyen d'une liaison de communication externe.

9. Procédé selon la revendication 8, dans lequel la liaison de communication externe est une liaison du système Internet.

10. Procédé selon l'une quelconque des revendications 7 à 9, dans lequel les domaines (A, B, C ; Domaine 1, Domaine 2) sont accessibles au moyen d'une clé publique racine.

11. Procédé selon l'une quelconque des revendications 7 à 10, dans lequel les capacités logicielles (a, b, c ; API1...API8, P1...P4, VF5...VF8) sont des interfaces de programmation d'applications.

12. Procédé selon l'une quelconque des revendications 7 à 11, comprenant l'étape consistant à mettre à jour les informations de domaines (D1, D2, D3 ; DDF1, DDF2) de sorte que l'on puisse faire varier celles des capacités logicielles ((a, b, c ; API1...API8, P1...P4, VF5...VF8) qui sont accessibles par l'intermédiaire des domaines (A, B, C, Domaine 1, Domaine 2).

## Patentansprüche

1. Endgerät für ein mobiles Telekommunikations-Netzwerk, das eine Vielzahl von Software-Fähigkeiten (a, b, c; API1..API8, P1..P4, VF5..VF8) besitzt; und eine Auswahleinrichtung zum Auswählen bestimmter solcher der Software-Fähigkeiten (a, b, c; API1..API8, P1..P4, VF5..VF8), um als ein Satz von Software-Fähigkeiten in jeweiligen logischen Domänen (a, b, c; Domäne 1, Domäne 2) zugänglich zu sein, so dass die jeweiligen logischen Domänen (A, B, C; Domäne 1, Domäne 2) jeweils einen unterschiedlichen Satz von Software-Fähigkeiten aufweisen, wobei die Auswahleinrichtung eine Datenspeichereinrichtung zum Speichern von Informationen (D1, D2, D3; DDF1, DDF2), die sich auf die Domänen (A, B, C; Domäne 1, Domäne 2) beziehen, und zum Auswählen der Software-Fähigkeiten (a, b, c; API1..API8, P1..P4, VF5..VF8) aufweist, die **dadurch** zugänglich sind, **dadurch gekennzeichnet, dass** das Endgerät eine Vielzahl von Smart-Card-Einrichtungen oder SIM-Einrichtungen (S) besitzt, die damit zugänglich sind, dass eine jeweilige Speichereinrichtung jeder Smart-Card-Einrichtung oder SIM-Einrichtung (S) zugeordnet ist, dass die Speichereinrichtungen getrennt von jeder Smart-Card-Einrichtung oder SIM-Einrichtung (S) angeordnet sind, dass jede Smart-Card-Einrichtung oder SIM-Einrichtung (S) die Adresse deren zugeordneter Speichereinrichtung speichert, und dass die jeweilige Speichereinrichtung, zugeordnet zu jeder Smart-Card-Einrichtung oder SIM-Einrichtung (S), unterschiedliche Informationen (D1, D2, D3; DDF1, DDF2) besitzt, so dass die Software-Fähigkeiten (a, b, c; API1..API8, P1..P4, VF5..VF8), die für den Benutzer des Endgeräts zu einem bestimmten Zeitpunkt verfügbar sind, davon abhängen, welche Smart-Card-Einrichtung oder SIM-Einrichtung (S) dem Endgerät zu diesem Zeitpunkt zugeordnet ist.

2. Endgerät nach Anspruch 1, in dem auf Speichereinrichtungen von dem Endgerät über die Adresse auf der SIM-Einrichtung (S) mittels einer externen Kommunikationsverbindung zugegriffen werden kann.

3. Endgerät nach Anspruch 2, bei dem die externe Kommunikationsverbindung eine Internet-Verbindung ist.

4. Endgerät nach einem der vorhergehenden Ansprüche, wobei die Domänen (A, B, C; Domäne 1, Domäne 2) mittels eines Root Public Key zugänglich sind.

5. Endgerät nach einem der vorhergehenden Ansprüche, in dem die Software-Fähigkeiten (a, b, c; API1..API8, P1..P4, VF5..VF8) Anwendungs-Programmier-Schnittstellen sind.

6. Endgerät nach einem der vorhergehenden Ansprüche, umfassend Einrichtungen zum Aktualisieren der Informationen (D1, D2, D3; DDF1, DDF2), gespeichert in der Speichereinrichtung, so dass solche der Software-Fähigkeiten (a, b, c; API1..API8, P1..P4, VF5..VF8), zugänglich über die Domänen (A, B, C; Domäne 1, Domäne 2), variiert werden können.

7. Verfahren zum Betreiben eines Endgeräts zur Verwendung in einem mobilen Kommunikations-Netzwerk, das die Schritte aufweist: Definieren einer Vielzahl von Software-Fähigkeiten (a, b, c; AP11..AP18, P1..P4, VF5..VF8) darin; und Auswählen bestimmter solcher der Software-Fähigkeiten (a, b, c; API1..API8, P1..P4, VF5..VF8), um als ein Satz von Software-Fähigkeiten in jeweiligen logischen Domänen (A, B, C; Domäne 1, Domäne 2) zugänglich zu sein, so dass die jeweiligen logischen Domänen (A, B, C; Domäne 1, Domäne 2) jeweils einen unterschiedlichen Satz von Software-Fähigkeiten aufweisen, wobei der Auswahlschritt den Schritt eines Speicherns von Domäne-Informationen (D1, D2, D3; DDF1, DDF2), die sich auf die Domänen (A, B, C; Domäne 1, Domäne 2) beziehen, und der die Anwendungen auswählt, die **dadurch** zugänglich sind, aufweist, **dadurch gekennzeichnet, dass** das Endgerät eine Vielzahl von Smart-Card-Einrichtungen oder SIM-Einrichtungen, die dazu zuordenbar sind, besitzt, dass die jeweiligen Domäne-Informationen in Zuordnung zu jeder Smart-Card-Einrichtung oder SIM-Einrichtung (S) gespeichert sind, dass die Domäne-Informationen an einer Stelle getrennt von jeder SIM-Einrichtung (S) oder Smart-Card-Einrichtung gespeichert sind, dass jede SIM-Einrichtung (S) oder Smart-Card-Einrichtung die Adresse deren zugeordneter Domäne-Informationen speichert, und dass die jeweiligen Domäne-Informationen, die jeder SIM-Einrichtung (S) oder Smart-Card-Einrichtung zugeordnet sind, unterschiedliche Informationen (D1, D2, D3; DDF1, DDF2) aufweist, so dass die Software-Fähigkeiten (a, b, c; API1..API8, P1..P4, VF5..VF8), die für den Benutzer des Endgeräts zu einem bestimmten Zeitpunkt verfügbar sind, davon abhängig sind, auf welcher der SIM-Einrichtung (S) oder Smart-Card-Einrichtung zu dem Endgerät zu diesem Zeitpunkt zugeordnet ist.

8. Verfahren nach Anspruch 7, umfassend den Schritt eines Zugreifens auf die Stelle von dem Endgerät über die Adresse auf der SIM-Einrichtung (S) mittels einer externen Kommunikationsverbindung.

9. Verfahren nach Anspruch 8, wobei die externe Kommunikationsverbindung eine Internet-Verbindung ist.

10. Verfahren nach einem der Ansprüche 7 bis 9, bei dem die Domänen (A, B, C; Domäne 1, Domäne 2) mittels eines Root Public Key zugänglich sind.

11. Verfahren nach einem der Ansprüche 7 bis 10, wobei die Software-Fähigkeiten (a, b, c; API1..API8, P1..P4, VF5..VF8) Anwendungs-Programmier-Schnittstellen sind.

12. Verfahren nach einem der Ansprüche 7 bis 11, umfassend den Schritt eines Aktualisierens der Domäne-Informationen (D1, D2, D3; DDF1, DDF2), so dass solche der Software-Fähigkeiten (a, b, c; API1..AP18, P1..P4, VF5..VF8), die über die Domänen (A, B, C; Domäne 1, Domäne 2) zugänglich sind, variiert werden können.
